# EUROPEAN PATENT APPLICATION

(11) **EP 3 393 007 A1**
(43) Date of publication of application: **24.10.2018**
(21) Application number: 18168040.6
(22) Date of filing: 18.04.2018
(51) Int. Cl.: H02J 50/40

(54) **WIRELESS CHARGING SYSTEM FOR SELECTIVELY USING ANTENNA**

(30) Priority: 19.04.2017 KR 20170050455
(71) Applicant: Center for Integrated Smart Sensors Foundation, Daejeon 34141 (KR)
(72) Inventor: LEE, Kyung Hak, 12022 Gyeonggi-do (KR); KIM, Young Ki, 35367 Daejeon (KR); CHOI, Jae Hyun, 08521 Seoul (KR); LEE, Hyun Wook, 34118 Daejeon (KR)
(74) Representative: Gill Jennings & Every LLP

(57) **Abstract**

Disclosed is a transmitter used in a wireless charging system. The transmitter includes at least one phase locked loop (PLL) that outputs a power signal, a first antenna that transmits the power signal transmitted from the at least one PLL to at least one receiver in an RF scheme, a second antenna that transmits the power signal to the at least one receiver in one of a magnetic resonance scheme and a magnetic induction scheme, and a controller that selectively drives at least one of the first and second antennas.

## Description

### CROSS-REFERENCE TO RELATED APPLICATIONS

A claim for priority under 35 U.S.C. § 119 is made to Korean Patent Application No. 10-2017-0050455filed on April 19, 2017,in the Korean Intellectual Property Office, the entire contents of which are hereby incorporated by reference.

### BACKGROUND

Embodiments of the inventive concept described herein relate to a wireless charging system for selectively using an antenna, and more particularly, relate to a technology that selectively drives one of two antennas to transmit a power signal.

In recent years, as various portable terminals using wireless communication have been widely spread, wireless charging technology for wirelessly charging a portable terminal has also been actively developed.

The wireless charging technology is a technique for charging a portable terminal with a power signal transmitted from a wireless charging transmitter in one of a magnetic induction scheme, a magnetic resonance scheme, and an RF scheme, where a wireless charging receiver is embedded in the portable terminal such that the power signal used for charging the portable terminal is received from the wireless charging transmitter.

Such a magnetic induction scheme (or a magnetic resonance scheme) used in a conventional wireless charging technology has an advantage of supplying a large amount of charging power for a predetermined time, but has a disadvantage of being available only at a short range. In addition, the RF scheme has a disadvantage of supplying a small amount of charging power for a predetermined time, but has an advantage of being available not only at a short range but also at a long range.

Thus, to solve the disadvantages of a conventional wireless charging technology that uses only one of the magnetic induction scheme, the magnetic resonance scheme, and the RF scheme, the following embodiments provide a wireless charging technology that selectively uses the magnetic induction scheme (or the magnetic resonance scheme) and the RF scheme.

### SUMMARY

Embodiments of the inventive concept provide a wireless charging technology selectively using the magnetic induction scheme (or the magnetic resonance scheme) and the RF scheme.

In detail, embodiments of the inventive concept provide a transmitter that includes a first antenna configured to transmit a power signal in an RF scheme and a second antenna configured to transmit a power signal in a magnetic resonance scheme or a magnetic induction scheme and selectively drives the first or second antenna, and a wireless charging system including the same.

In this case, embodiments of the inventive concept provide a transmitter that receives information including information about a wireless charging scheme of at least one receiver, information about a distance between the transmitter and the receiver, information about a location of the receiver, information about charging power of the receiver, information about a required charging time of the receiver, or information about a charging pattern of the receiver, and selectively drives the first or second antenna based on the information, and a wireless charging system including the same.

In addition, embodiments of the inventive concept provide a transmitter that selectively drives the first or second antenna based on control information preset with time instead of the reception of the information from the receiver, and a wireless charging system including the same.

According to an aspect of an embodiment, a transmitter used in a wireless charging system includes at least one phase locked loop (PLL) that outputs a power signal, a first antenna that transmits the power signal transmitted from the at least one PLL to at least one receiver in an RF scheme, a second antenna that transmits the power signal to the at least one receiver in one of a magnetic resonance scheme and a magnetic induction scheme, and a controller that selectively drives at least one of the first and second antennas.

The controller may selectively drive at least one of the first and second antennas based on information received from the at least one receiver.

The information received from the at least one receiver may include at least one of information about a wireless charging scheme of the at least one receiver, information about a distance between the transmitter and the at least one receiver, information about a location of the at least one receiver, information about charging power of the at least one receiver, information about a required charging time of the at least one receiver, and information about a charging pattern of the at least one receiver.

The information received from the at least one receiver may be obtained based on a received signal strength indication (RSSI) of the at least one receiver.

The transmitter may further include a communication antenna that receives the information from the at least one receiver.

The controller may periodically alternately drive at least one of the first and second antennas based on information periodically received from the at least one receiver.

The controller may selectively drive at least one of the first and second antennas based on control information preset with time.

The controller may selectively drive one of the first and second antennas such that charging power of the at least one receiver is maximized.

The at least one PLL may include a plurality of PLLs that correspond to the first and second antennas, respectively.

The first and second antennas may share the at least one PLL with each other.

The transmitter may further include at least one power amplifier arranged between the at least one PLL and the first and second antennas to amplify the power signal transmitted from the at least one PLL.

According to another aspect of an embodiment, a wireless charging system includes at least one transmitter, and at least one receiver wirelessly charged by the at least one transmitter, wherein the at least one transmitter includes at least one phase locked loop (PLL) that outputs a power signal, a first antenna that transmits the power signal transmitted from the at least one PLL to the at least one receiver in an RF scheme, a second antenna that transmits the power signal to the at least one receiver in one of a magnetic resonance scheme and a magnetic induction scheme, and a controller that selectively drives at least one of the first and second antennas.

The controller may selectively drive at least one of the first and second antennas based on information received from the at least one receiver.

The information received from the at least one receiver may include at least one of information about a wireless charging scheme of the at least one receiver, information about a distance between the transmitter and the at least one receiver, information about a location of the at least one receiver, information about charging power of the at least one receiver, information about a required charging time of the at least one receiver, and information about a charging pattern of the at least one receiver.

The controller may selectively drive at least one of the first and second antennas based on control information preset with time.

### BRIEF DESCRIPTION OF THE FIGURES

The above and other objects and features will become apparent from the following description with reference to the following figures, wherein like reference numerals refer to like parts throughout the various figures unless otherwise specified, and wherein:
FIG. 1 is a view illustrating a wireless charging system according to an embodiment;
FIG. 2 is a block diagram illustrating a structure of a transmitter included in a wireless charging system according to an embodiment;
FIGS. 3 to 5 are views illustrating an operation of selectively driving an antenna of the transmitter illustrated in FIG. 2; and
FIG. 6 is a block diagram illustrating a structure of a transmitter included in a wireless charging system according to another embodiment.

### DETAILED DESCRIPTION

Hereinafter embodiments of the inventive concept will be described in detail with reference to the accompanying drawings. However, it should be understood that the inventive concept is not limited to the following embodiments. In addition, the same reference numerals used in each drawing represent the same elements.

In addition, terminologies used herein are defined to appropriately describe the exemplary embodiments of the inventive concept and thus may be changed depending on a viewer, the intent of an operator, or a custom. Accordingly, the terminologies must be defined based on the following overall description of this disclosure.

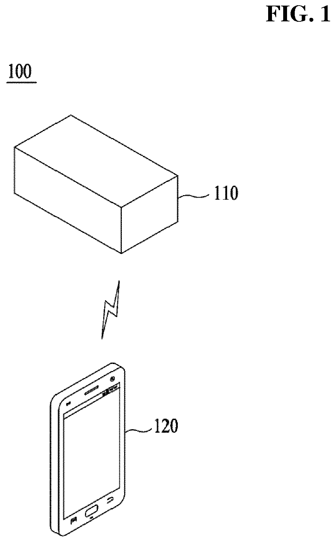

FIG. 1 is a view illustrating a wireless charging system according to an embodiment.

Referring to FIG. 1, a wireless charging system 100 according to an embodiment may be arranged in various spaces (e.g., an indoor space) requiring wireless charging. In this case, various receivers requiring wireless charging may exist in the indoor space. receivers, there may be a receiver using only a magnetic resonance scheme (or a magnetic induction scheme), a receiver using only an RF method, and a receiver using both a magnetic resonance scheme (or a magnetic induction scheme) and an RF scheme. Hereinafter, the wireless charging system 100 that includes at least one transmitter 110 and at least one receiver 120 using both a magnetic resonance scheme (or a magnetic induction scheme) and an RF scheme will be described.

The at least one transmitter 110 transmits a power signal to the at least one receiver 120 such that the at least one receiver 120 is wirelessly charged by the at least one transmitter 110. Hereinafter, the at least one receiver 120 is illustrated as a portable terminal, but the embodiment is not limited thereto and the at least one receiver 120 means a module installed inside or outside the portable terminal to support wireless charging of the portable terminal.

Specifically, the at least one transmitter 110 selectively uses the magnetic induction scheme (or the magnetic resonance scheme) or the RF scheme to transmit the power signal to the at least one receiver 120.

In detail, the at least one transmitter 110 may include a first antenna using the RF scheme and a second antenna using the magnetic induction scheme (or the magnetic resonance scheme) and selectively drive the first or second antenna to selectively use the magnetic induction scheme (or the magnetic resonance scheme) or the RF scheme such that the power signal is transmitted to the at least one receiver 120.

In this case, the at least one transmitter 110 may obtain and recognize information about a wireless charging scheme of the at least one receiver 120, information about a distance between a transmitter and a receiver received from the at least one receiver 120, information about a location of a receiver, information about charging power of a receiver, and may selectively use the magnetic induction scheme (or the magnetic resonance scheme) or the RF scheme in consideration of the charging efficiency of the at least one receiver 120.

In addition, the at least one transmitter 110 may obtain and recognize information about a required charging time of a receiver received from the at least one receiver 120 or information about a charging pattern of a receiver, and may selectively use the magnetic induction scheme (or the magnetic resonance scheme) or the RF scheme in consideration of the preference and pattern of a user using the at least one receiver 120.

In addition, the at least one transmitter 110 may selectively use the magnetic induction scheme (or the magnetic resonance scheme) or the RF scheme based on control information preset with time, such that the at least one transmitter 110 considers the overall charging efficiency in the wireless charging system 100.

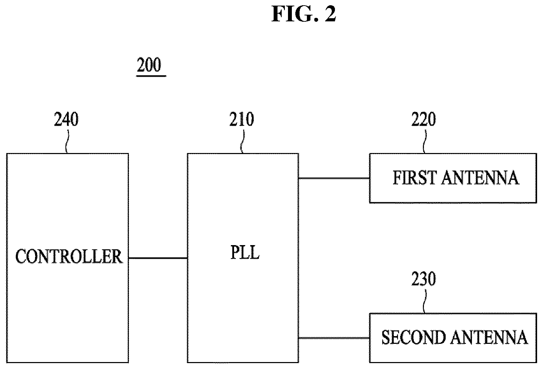

The detailed structure of the at least one transmitter 110 will be described below with reference to FIG. 2.

As described above, the wireless charging system 100 may selectively drive one of the first antenna (using the RF scheme) and the second antenna (using the magnetic induction scheme or the magnetic resonance scheme), which are included in the at least one transmitter 110, to selectively use the magnetic induction scheme (or the magnetic resonance scheme) and the RF scheme, and may transmit the power signal to the at least one receiver 120, so that the wireless charging system 100 adaptively takes only the advantages of the magnetic induction scheme (or the magnetic resonance scheme) and the RF scheme.

FIG. 2 is a block diagram illustrating a structure of a transmitter included in a wireless charging system according to an embodiment.

Referring to FIG. 2, a transmitter 200 according to an embodiment, which is included in the wireless charging system illustrated in FIG. 1, includes one phase locked loop (PLL) 210, first and second antennas 220 and 230, and a controller 240 and performs an operation of charging at least one receiver.

The PLL 210 outputs a power signal. In this case, the PLL 210, which is a circuit for outputting a fixed-phase frequency signal, oscillates at an output frequency matched with an input frequency, and that is, has a function of generating a power signal for wireless charging. The detailed description of the circuit of the PLL 210 will be omitted because it is beyond the technical scope of the inventive concept.

The first antenna 220 transmits the power signal transmitted from the PLL 210 to at least one receiver in the RF scheme, and the second antenna 230 transmits a power signal to at least one receiver in the magnetic resonance scheme or magnetic induction scheme. That is, the first antenna 220 may be a planer inverted F antenna (PIFA) or a patch antenna, and the second antenna 230 may be a loop antenna.

In this case, each of the first and second antennas 220 and 230 may include a matching unit corresponding to the PLL 210. However, the embodiment is not limited to the above, and the matching unit may be included in the PLL 210.

As described above, since the transmitter 200 according to an embodiment includes the plurality of antennas 220 and 230 and the one PLL 210, the antennas 220 and 230 may share the one PLL 210 with each other.

The controller 240 selectively drives at least one of the first and second antennas 220 and 230.

Specifically, the controller 240 may selective drive at least one of the first and second antennas 220 and 230 based on the information received from at least one receiver.

In this case, the information that the controller 240 receives from at least one receiver may include at least one of information about a wireless charging scheme of the at least one receiver, information about a distance between the transmitter 200 and the at least one receiver, information about a location of the at least one receiver, information about charging power of the at least one receiver, information about a required charging time of the at least one receiver, and information about a charging pattern of the at least one receiver.

In detail, the controller 240 may directly receive the information about a wireless charging scheme of the at least one receiver, the information about a distance between the transmitter 200 and the at least one receiver, the information about a location of the at least one receiver, the information about charging power of the at least one receiver, the information about a required charging time of the at least one receiver, or the information about a charging pattern of the at least one receiver from the at least one receiver, such that the controller 240 uses the information during an operation of selectively driving at least one of the first and second antennas 220 and 230.

For example, when the at least one receiver uses only the magnetic resonance scheme (or the magnetic induction scheme), the controller 240 may drive the second antenna 230 using the magnetic resonance or induction scheme among the first and second antennas 220 and 230. To the contrary, when the at least one receiver uses only the RF scheme, the controller 240 may drive the first antenna 220 using the RF scheme among the first and second antennas 220 and 230.

As another example, when the distance between the transmitter 200 and the at least one receiver is equal to or greater than a preset reference distance, the controller 240 may drive the first antenna 220 using the RF scheme among the first and second antennas 220 and 230. To the contrary, when the distance between the transmitter 200 and the at least one receiver is less than the preset reference distance, the controller 240 may drive the second antenna 230 using the magnetic resonance or induction scheme among the first and second antennas 220 and 230.

As still another example, when the location (or direction) of the at least one receiver is unsuitable for the RF scheme, the controller 240 may drive the second antenna 230 using the magnetic resonance or induction scheme among the first and second antennas 220 and 230.

As still another example, when the charging power of the at least one receiver is greater than a preset reference power, the controller 240 may recognize that charging of a larger amount of power is required for a predetermined charging time and may drive the second antenna 230 using the magnetic resonance or induction scheme among the first and second antennas 220 and 230.

As still another example, when the required charging time of the at least one receiver is shorter than a preset reference time, the controller 240 may recognize that it is required to charge the predetermined charging power of the at least one receiver at a high speed and may drive the second antenna 230 using the magnetic resonance or induction scheme among the first and second antennas 220 and 230.

As still another example, when a user using the at least one receiver prefers the RF scheme so that the information about a past charging pattern indicating that the user has mainly used the RF scheme in the past is received, the controller may drive the first antenna 220 using the RF scheme among the first and second antennas 220 and 230.

In the above examples, the controller 240selectively drives only one of the first and second antennas 220 and 230. However, the embodiment is not limited thereto, and the controller 240 may selectively drive at least one of the first and second antennas 220 and 230 (e.g., only the first antenna 220 is driven, only the second antenna 230 is driven, or both the first and second antennas 220 and 230 are driven).

In addition, instead of directly receiving the information about a wireless charging scheme of the at least one receiver, the information about a distance between the transmitter 200 and the at least one receiver, the information about a location of the at least one receiver, the information about charging power of the at least one receiver, the information about a required charging time of the at least one receiver, or the information about a charging pattern of the at least one receiver from the at least one receiver, after receiving only basic information related to wireless charging which may be derived from the at least one receiver, the controller 240 may analyze the basic information, thereby obtaining the information about a wireless charging scheme of the at least one receiver, the information about a distance between the transmitter 200 and the at least one receiver, the information about a location of the at least one receiver, the information about charging power of the at least one receiver, the information about a required charging time of the at least one receiver, or the information about a charging pattern of the at least one receiver.

For example, by receiving a received signal strength indication (RSSI) of the at least one receiver from the at least one receiver, the controller 240 may obtain the information about a wireless charging scheme of the at least one receiver, the information about a distance between the transmitter 200 and the at least one receiver, the information about a location of the at least one receiver, the information about charging power of the at least one receiver, the information about a required charging time of the at least one receiver, or the information about a charging pattern of the at least one receiver based on the RSSI of the at least one receiver, and may use the obtained information for an operation of selectively driving at least one of the first and second antennas 220 and 230.

As described above, the controller 240 may periodically receive information from the at least one receiver based on a preset period. Thus, the controller 240 may periodically alternately drive at least one of the first and second antennas 220 and 230.For example, while the first antenna 220 is driven based on the information transmitted from the at least one receiver during a first period, the controller 240 may stop driving the first antenna 220 based on the information transmitted from the at least one receiver during a second period and then, may drive the second antenna 230.

In this case, the controller 240 may select one wireless charging scheme by which the charging power of the at least one receiver can be maximized, based on the information received from the at least one receiver, and then, may drive one of the first and second antennas 220 and 230 corresponding to the selected wireless charging scheme.

In this case, the information, which is used by the controller 240 in driving at least one of the first and second antennas 220 and 230,may be received from the at least one receiver through a communication antenna (not shown) included in the transmitter 200.In this case, the transmitter 200 may receive the information from the at least one receiver through the communication antenna and may transmit the power signal to the at least one receiver through at least one of the first and second antennas 220 and 230. However, the embodiment is not limited to the above, and the transmitter 200 may use the first antenna 220 using the RF scheme such that the usage of the first antenna 220 alternates between communication and charging at the preset period.

In addition, instead of receiving the information from the at least one receiver, the controller 240 may selectively drive at least one of the first and second antennas 220 and 230 based on the control information preset with time. For example, when the control information is set to use the transmitter 200 in the magnetic resonance scheme (or magnetic induction scheme) from 9:00 a.m. to 6:00 p.m. and in the RF scheme from 6:00 p.m. to 9:00 a.m., after checking the time at which the at least one receiver requests charging, the controller 240 may selectively drive at least one of the first and second antennas 220 and 230.

In addition, although not illustrated in the drawings, the transmitter 200 may further include one power amplifier which is arranged between the PLL 210 and the first and second antennas 220 and 230 to amplify the power signal transmitted from the PLL 210.

As described above, by selectively driving at least one of the first and second antennas 220 and 230, the transmitter 200 according to an embodiment may also take into consideration the charging efficiency of the at least one receiver, the preference and pattern of the user using the at least one receiver, and the entire charging efficiency of the wireless charging system.

The antenna driving operation of the transmitter 200 will be described in detail below.

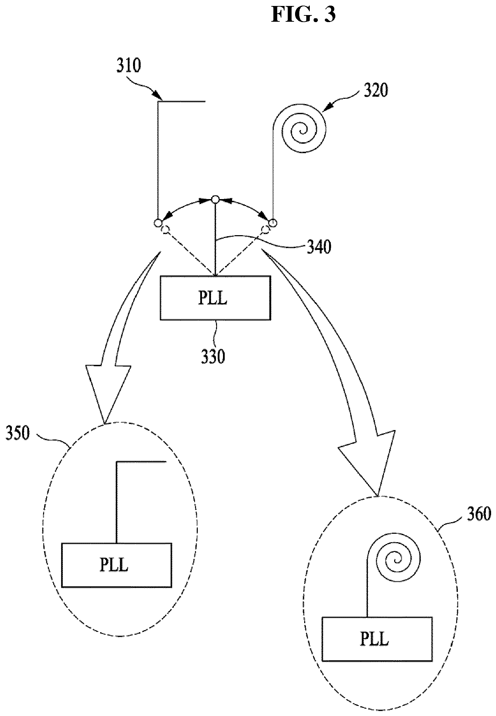

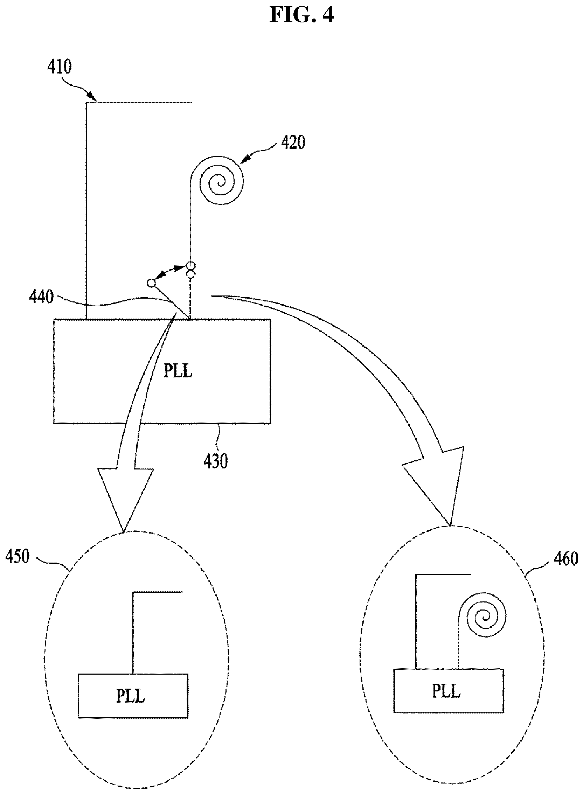

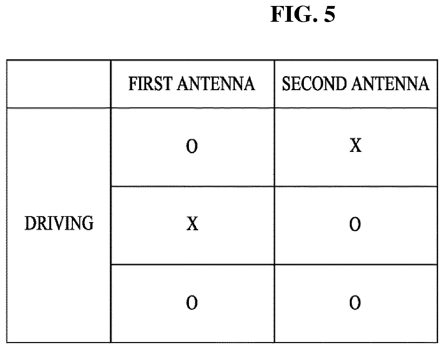

FIG. 3 is a conceptual diagram of a first circuit for explaining the selective antenna driving operation of the transmitter illustrated in FIG. 2. FIG. 4 is a conceptual diagram of a second circuit for explaining the selective antenna driving operation of the transmitter illustrated FIG. 2. FIG. 5 is a conceptual diagram of a third circuit for explaining the selective antenna driving operation of the transmitter illustrated FIG. 2.

Referring to FIG. 3, first and second antennas 310 and 320 included in a transmitter according to an embodiment may be selectively connected to a PLL 330 by a controller (not shown).

For example, when the first antenna 310 is to be driven, the controller connects the first antenna 310 to the PLL 330 by using a switch 340, so that only the first antenna 310 is connected to the PLL 330. In this case, an equivalent circuit of the transmitter may be implemented as reference numeral 350.

Alternatively, when the second antenna 320 is to be driven, the controller connects the second antenna 320 to the PLL 330 by using the switch 340, so that only the second antenna 320 is connected to the PLL 330. In this case, an equivalent circuit of the transmitter may be implemented as reference numeral 360.

Referring to FIG. 4, only one of first and second antennas 410 and 420 included in a transmitter according to another embodiment may be selectively connected to a PLL 430 by a controller (not shown).

For example, as illustrated in FIG. 4, the first antenna 410may be kept connected to the PLL 430 at all times, and the controller may control a switch 440 to selectively connect only the second antenna 420 to the PLL 430in some cases. In the case where the second antenna 420 is not connected to the PLL 430, an equivalent circuit of the transmitter may be implemented as reference numeral 450. In the case where the second antenna 420 is connected to the PLL 430, an equivalent circuit of the transmitter may be implemented as reference numeral 460.

As another example, unlike the drawing, the second antenna 420 is kept connected to the PLL 430 at all times, and the controller may control the switch 440 to selectively connect only the first antenna 410 to the PLL 430 in some times.

That is, as illustrated in the table of FIG. 5, the transmitter included in the wireless charging system may selectively drive at least one of the first and second antennas 410 and 420.

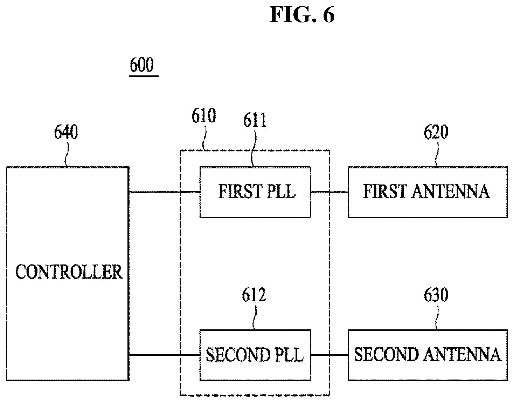

FIG. 6 is a block diagram illustrating a structure of a transmitter included in a wireless charging system according to another embodiment.

Referring to FIG. 6, a transmitter 600 according still another embodiment, which is included in the wireless charging system illustrated in FIG. 1, includes a plurality of PLLs 610, first and second antennas 620 and 630, and a controller 640, and performs an operation of charging at least one receiver.

A difference between the transmitter 600 according to still another embodiment and the transmitter illustrated in FIG. 2 is that the transmitter 600 according to still another embodiment includes the plurality of PLLs 610while the transmitter illustrated in FIG. 2 includes one PLL. Since the transmitter illustrated in FIG. 2 includes only one PLL, the first and second antennas transmit power signals having the same frequency. However, since the transmitter 600 according to still another embodiment includes the PLLs 610 (specifically, including two PLLs corresponding to the first and second antennas 620 and 630), the first and second antennas 620 and 630 may transmit power signals having mutually different frequencies, respectively.

Hereinafter, it will be described that the PLLs 610 include two PLLs (a first PLL 611 corresponding to the first antenna 620 and a second PLL 612 corresponding to the second antenna 630) corresponding to the first and second antennas 620 and 630. However, the embodiment is not limited to the above, and may include two or more PLLs such that power signals having various frequencies are transmitted based on the information received from the at least one receiver.

The PLLs 610 output power signals. In this case, each PLL 610, which is a circuit outputting a fixed-phase frequency signal, oscillates at an output frequency matched with an input frequency and generates a power signal for wireless charging. The detailed description of the circuit of each PLL 610 will be omitted because it is beyond the technical scope of the inventive concept.

The first antenna 620 transmits the power signal transmitted from the first PLL 611 to the at least one receiver in the RF scheme, and the second antenna 630 transmits the power signal transmitted from the second PLL 612 to the at least one receiver in the magnetic resonance or induction scheme. That is, the first antenna 620 may be a PIFA or a patch antenna, and the second antenna 630 may be a loop antenna. In addition, when the power signals output from the first and second PLLs 611 and 612 have mutually different frequencies, the power signals transmitted from the first and second antennas 620 and 630 may have mutually different frequencies.

In this case, each of the first and second antennas620 and 630 may include a matching unit corresponding to each PLL 610. However, the embodiment is not limited to the above and the matching units may be included in the PLLs 610, respectively.

The controller 640 selectively drives at least one of the first and second antennas 620 and 630.

Specifically, the controller 640 may selectively drive at least one of the first and second antennas 620 and 630 based on the information received from at least one receiver.

In this case, the information that the controller 640 receives from the at least one receiver may include at least one of information about a wireless charging scheme of the at least one receiver, information about a distance between the transmitter 600 and the at least one receiver, information about a location of the at least one receiver, information about charging power of the at least one receiver, information about a required charging time of the at least one receiver, and information about a charging pattern of the at least one receiver.

In detail, the controller 640 may directly receive the information about a wireless charging scheme of the at least one receiver, the information about a distance between the transmitter 600 and the at least one receiver, the information about a location of the at least one receiver, the information about charging power of the at least one receiver, the information about a required charging time of the at least one receiver, or the information about a charging pattern of the at least one receiver from the at least one receiver, such that the controller 640 uses the information during an operation of selectively driving at least one of the first and second antennas 620 and 630.

Since the scheme and procedure in which the controller 640selectively drives at least one of the first and second antennas 620 and 630 based on the information received from the at least one receiver are the same as those described with reference to FIG. 2, the detailed description will be omitted.

Likewise, the transmitter 600 may further include a communication antenna (not shown in the drawings) configured to receive information from at least one transmitter. However, the embodiment is not limited to the above, and the transmitter 600 may use the first antenna 620 using the RF scheme such that the usage of the first antenna 620 alternates between communication and charging at a preset period.

In addition, similarly with the scheme and procedure described with reference to FIG. 2, the controller 640 may selectively drive at least one of the first and second antennas 620 and 630 based on the control information preset with time.

In this case, the controller 640 may selectively drive not only at least one of the first and second antennas 620 and 630 but also at least one of the first PLL 611 corresponding to the first antenna 620 and the second PLL 612 corresponding to the second antenna 630.

In this case, the controller 640 may also selectively drive at least one of the PLLs 610 based on the information received from the at least one receiver or the control information preset with time, thereby minimizing the driving power of the transmitter 600.

In addition, although not illustrated in the drawings, the transmitter 600 may further include at least one power amplifier which is arranged between the PLLs610 and the first and second antennas 620 and 630 to amplify the power signal transmitted from each PLL 610. For example, the transmitter 600 may include one power amplifier that amplifies the power signals transmitted from the PLLs 610, or a plurality of amplifiers power signals corresponding to the PLLs 610, respectively. In the latter case, the number of power amplifiers may correspond to the number of PLLs 610.

As described above, by selectively driving at least one of the first and second antennas 620 and 630, the transmitter 200 according to still another embodiment may also take into consideration the charging efficiency of the at least one receiver, the preference and pattern of the user using the at least one receiver, and the entire charging efficiency of the wireless charging system.

Since the antenna driving operation of the transmitter 600 is the same as that described with reference to FIGS 3 to 5, the details will be omitted.

According to the embodiments, there may be provided a wireless charging technology selectively using the magnetic induction scheme (or the magnetic resonance scheme) and the RF scheme.

In detail, according to the embodiments, there may be provided a transmitter that includes a first antenna configured to transmit a power signal in an RF scheme and a second antenna configured to transmit a power signal in a magnetic resonance scheme or a magnetic induction scheme and selectively drives the first or second antenna, and a wireless charging system including the same.

In this case, according to the embodiments, there may be provided a transmitter that receives information including information about a wireless charging scheme of at least one receiver, information about a distance between the transmitter and the receiver, information about a location of the receiver, information about charging power of the receiver, information about a required charging time of the receiver, or information about a charging pattern of the receiver from the receiver, and selectively drives the first or second antenna based on the information, and a wireless charging system including the same.

In addition, according to the embodiments, there may be provided a transmitter that selectively drives the first or second antenna based on control information preset with time instead of the reception of the information from the receiver, and a wireless charging system including the same.

Therefore, according to the embodiments, there may be provided a transmitter and a wireless charging system that adaptively take only the advantages of the magnetic induction scheme (or the magnetic resonance scheme) and the RF scheme.

While a few exemplary embodiments have been shown and described with reference to the accompanying drawings, it will be apparent to those skilled in the art that various modifications and variations can be made from the foregoing descriptions. For example, adequate effects may be achieved even if the foregoing processes and methods are carried out in different order than described above, and/or the aforementioned elements, such as systems, structures, devices, or circuits, are combined or coupled in different forms and modes than as described above or be substituted or switched with other components or equivalents.

Thus, it is intended that the inventive concept covers other realizations and other embodiments of this invention provided they come within the scope of the appended claims and their equivalents.

While the inventive concept has been described with reference to embodiments, it will be apparent to those skilled in the art that various changes and modifications may be made without departing from the spirit and scope of the inventive concept. Therefore, it should be understood that the above embodiments are not limiting, but illustrative.

## Claims

1. A transmitter used in a wireless charging system, the transmitter comprising:
at least one phase locked loop (PLL) configured to output a power signal;
a first antenna configured to transmit the power signal transmitted from the at least one PLL to at least one receiver in an RF scheme;
a second antenna configured to transmit the power signal to the at least one receiver in one of a magnetic resonance scheme and a magnetic induction scheme; and
a controller configured to selectively drive at least one of the first and second antennas.

2. The transmitter of claim 1, wherein the controller selectively drives at least one of the first and second antennas based on information received from the at least one receiver.

3. The transmitter of claim 2, wherein the information received from the at least one receiver includes at least one of information about a wireless charging scheme of the at least one receiver, information about a distance between the transmitter and the at least one receiver, information about a location of the at least one receiver, information about charging power of the at least one receiver, information about a required charging time of the at least one receiver, and information about a charging pattern of the at least one receiver.

4. The transmitter of claim 3, wherein the information received from the at least one receiver is obtained based on a received signal strength indication (RSSI) of the at least one receiver.

5. The transmitter of claim 2, further comprising:
a communication antenna configured to receive the information from the at least one receiver.

6. The transmitter of claim 2, wherein the controller periodically alternately drives at least one of the first and second antennas based on information periodically received from the at least one receiver.

7. The transmitter of claim 1,wherein the controller selectively drives at least one of the first and second antennas based on control information preset with time.

8. The transmitter of claim 1, wherein the controller selectively drives one of the first and second antennas such that charging power of the at least one receiver is maximized.

9. The transmitter of claim 1, wherein the at least one PLL includes a plurality of PLLs that correspond to the first and second antennas, respectively.

10. The transmitter of claim 1,wherein the first and second antennas share the at least one PLL with each other.

11. The transmitter of claim 1,further comprising:
at least one power amplifier arranged between the at least one PLL and the first and second antennas to amplify the power signal transmitted from the at least one PLL.

12. A wireless charging system comprising:
at least one transmitter; and
at least one receiver wirelessly charged by the at least one transmitter,
wherein the at least one transmitter comprises:
at least one phase locked loop (PLL) configured to output a power signal;
a first antenna configured to transmit the power signal transmitted from the at least one PLL to the at least one receiver in an RF scheme;
a second antenna configured to transmit the power signal to the at least one receiver in one of a magnetic resonance scheme and a magnetic induction scheme; and
a controller configured to selectively drive at least one of the first and second antennas.

13. The wireless charging system of claim 12, wherein the controller selectively drives at least one of the first and second antennas based on information received from the at least one receiver.

14. The wireless charging system of claim 13, wherein the information received from the at least one receiver includes at least one of information about a wireless charging scheme of the at least one receiver, information about a distance between the transmitter and the at least one receiver, information about a location of the at least one receiver, information about charging power of the at least one receiver, information about a required charging time of the at least one receiver, and information about a charging pattern of the at least one receiver.

15. The wireless charging system of claim 12, wherein the controller selectively drives at least one of the first and second antennas based on control information preset with time.
